(19) Europäisches Patentamt
European Patent Office
Office européen des brevets

(11) **EP 2 225 789 B1**

(12) **EUROPÄISCHE PATENTSCHRIFT**

(45) Veröffentlichungstag und Bekanntmachung des Hinweises auf die Patenterteilung:
**06.07.2011 Patentblatt 2011/27**

(21) Anmeldenummer: **08863103.1**

(22) Anmeldetag: **18.11.2008**

(51) Int Cl.:
**H01M 8/04** (2006.01)

(86) Internationale Anmeldenummer:
**PCT/EP2008/009735**

(87) Internationale Veröffentlichungsnummer:
**WO 2009/077048 (25.06.2009 Gazette 2009/26)**

(54) **VERDAMPFUNGSGEKÜHLTES BRENNSTOFFZELLENSYSTEM UND VERFAHREN ZUM BETREIBEN EINES VERDAMPFUNGSGEKÜHLTEN BRENNSTOFFZELLENSYSTEMS**

EVAPORATION-COOLED FUEL CELL SYSTEM AND METHOD FOR OPERATING AN EVAPORATION-COOLED FUEL CELL SYSTEM

SYSTÈME DE PILE À COMBUSTIBLE REFROIDI PAR ÉVAPORATION ET PROCÉDÉ D'EXPLOITATION D'UN SYSTÈME DE PILES À COMBUSTIBLE REFROIDI PAR ÉVAPORATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.12.2007 DE 102007060428**
**14.12.2007 US 13670 P**

(43) Veröffentlichungstag der Anmeldung:
**08.09.2010 Patentblatt 2010/36**

(73) Patentinhaber: **Airbus Operations GmbH**
**21129 Hamburg (DE)**

(72) Erfinder: **SCHEIBERT, Tobias**
**22609 Hamburg (DE)**

(74) Vertreter: **Schicker, Silvia et al**
**Wuesthoff & Wuesthoff**
**Patent- und Rechtsanwälte**
**Schweigerstrasse 2**
**81541 München (DE)**

(56) Entgegenhaltungen:
WO-A-2005/112156        DE-A1- 19 935 719
JP-A- 2001 349 681        US-A- 3 964 930
US-A1- 2005 022 550

**Beschreibung**

Die vorliegende Erfindung betrifft ein verdampfungsgekühltes Brennstoffzellensystem und ein Verfahren zum Betreiben eines verdampfungsgekühlten Brennstoffzellensystems.

Brennstoffzellensysteme ermöglichen es, emissionsarm und mit einem hohen Wirkungsgrad elektrischen Strom zu erzeugen. Daher gibt es gegenwärtig Bestrebungen, Brennstoffzellensysteme in verschiedenen mobilen Anwendungen, wie z.B. in der Automobiltechnik, in der Schifffahrt oder in der Luftfahrt zur Erzeugung elektrischer Energie heranzuziehen. Beispielsweise ist es denkbar, in einem Flugzeug die derzeit zur Bordstromversorgung eingesetzten, von den Haupttriebwerken oder der Hilfsturbine angetriebenen Generatoren durch ein Brennstoffzellensystem zu ersetzen. Darüber hinaus könnte ein Brennstoffzellensystem auch zur Notstromversorgung des Flugzeugs verwendet werden und die bisher als Notstromaggregat eingesetzte Ram Air Turbine (RAT) ersetzen.

Brennstoffzellen umfassen üblicherweise einen Kathodenbereich sowie einen durch einen Elektrolyt von dem Kathodenbereich getrennten Anodenbereich. Im Betrieb der Brennstoffzelle wird der Anodenseite der Brennstoffzelle ein Brennstoff, beispielsweise Wasserstoff, und der Kathodenseite der Brennstoffzelle ein sauerstoffhaltiges Oxidationsmittel, beispielsweise Luft zugeführt. Bei einer Polymerelektrolytmembran(PEM)-Brennstoffzelle reagieren die Wasserstoffmoleküle an einem im Anodenbereich vorhandenen Anodenkatalysator beispielsweise nach Gleichung (1)

$$H_2 \rightarrow 2 \cdot H^+ + 2 \cdot e^- \qquad (1)$$

und geben dabei unter Bildung von positiv geladenen Wasserstoffionen Elektronen an die Elektrode ab.

Die im Anodenbereich gebildeten $H^+$-Ionen diffundieren anschließend durch den Elektrolyt zur Kathode, wo sie an einem im Kathodenbereich vorhandenen Kathodenkatalysator mit dem der Kathode zugeführten Sauerstoff sowie den über einen äußeren Stromkreis zur Kathode geleiteten Elektronen nach Gleichung (2)

$$0{,}5 \cdot O_2 + 2 \cdot H^+ + 2 \cdot e^- \rightarrow H_2O \qquad (2)$$

zu Wasser reagieren.

Neben elektrischer Energie erzeugt eine Brennstoffzelle im Betrieb thermische Energie, die mit Hilfe eines Kühlsystems von der Brennstoffzelle abgeführt werden muss, um eine Überhitzung der Brennstoffzelle zu verhindern. Bei mobilen Anwendungen, bei denen üblicherweise nur ein Teil der von der Brennstoffzelle im Betrieb erzeugten thermischen Energie systeminternen oder externen Wärmeabnehmern zur weiteren Nutzung zugeführt werden kann, muss häufig zumindest ein Teil der von der Brennstoffzellen erzeugten Reaktionswärme an die Umgebung abgegeben werden. Eine in einem Flugzeug, beispielsweise zur Bordstromversorgung, eingesetzte Brennstoffzelle muss so ausgelegt sein, dass sie dazu in der Lage ist, einen hohen Bedarf an elektrischer Energie zu decken. Eine hinsichtlich der Erzeugung elektrischer Energie leistungsstarke Brennstoffzelle generiert jedoch auch eine große Menge thermischer Energie und hat daher einen hohen Kühlbedarf.

Grundsätzlich kann eine an Bord eines Flugzeugs eingesetzte Brennstoffzelle auf verschiedene Weise gekühlt werden. Beispielsweise ist eine Flüssigkeitskühlung möglich, bei der eine Flüssigkeit als Kühlmedium eingesetzt wird, um die von der Brennstoffzelle erzeugte Reaktionswärme aufzunehmen. Die Kühlleistung eines Flüssigkeitskühlsystems berechnet sich überschlägig nach Gleichung (3)

$$\dot{Q}_F = \dot{m}_F \cdot c_{pF} \cdot \Delta T_F \qquad\qquad\qquad (3)$$

wobei $\dot{Q}_F$ das Wärmeaufnahmevermögen der Kühlflüssigkeit, $\dot{m}_F$ der Massenstrom $c_{pF}$ die Wärmekapazität der Kühlflüssigkeit und $\Delta T_F$ die Temperaturdifferenz zwischen der Kühlflüssigkeitsaustrittstemperatur und der Kühlflüssigkeitseintrittstemperatur ist.

Wie aus Gleichung (3) unmittelbar ersichtlich ist, erfordert eine wirksame Flüssigkeitskühlung, bei der die Kühlflüssigkeit im Kreislauf geführt wird, dass durch Wärmeaufnahme von der Brennstoffzelle erwärmte Kühlflüssigkeit wieder um $\Delta T_F$ abgekühlt wird, bevor sie erneut wirksam Brennstoffzellenabwärme aufnehmen kann. Zu Abkühlung der Kühlflüssigkeit um $\Delta T_F$ kann die Kühlflüssigkeit beispielsweise einem Wärmetauscher zugeführt werden, in dem die in der Kühlflüssigkeit gespeicherte thermische Energie auf ein weiteres Kühlmedium, beispielsweise Umgebungsluft übertragen wird. Alternativ zu einer Flüssigkeitskühlung der Brennstoffzelle mit anschließender Umgebungsluftrückkühlung der Kühlflüssigkeit ist auch eine direkte Umgebungsluftkühlung der Brennstoffzelle denkbar.

Unabhängig davon, ob ein Umgebungsluftkühlsystem zur direkten Umgebungsluftkühlung einer Brennstoffzelle eingesetzt wird oder lediglich der Rückkühlung der Kühlflüssigkeit eines Flüssigkeitskühlsystems dient, berechnet sich die Kühlleistung des Umgebungsluftkühlsystem überschlägig nach Gleichung (4)

$$\dot{Q}_L = \dot{m}_L \cdot c_{pL} \cdot \Delta T_L \qquad\qquad (4)$$

wobei $\dot{Q}_L$ das Wärmeaufnahmevermögen der Kühlluft, $m_L$ der Massenstrom der Kühlluft, $c_{pL}$ die Wärmekapazität der Kühlluft und $\Delta T_L$ die Temperaturdifferenz zwischen der Kühlluftaustrittstemperatur und der Umgebungslufttemperatur ist.

Gleichung (4) macht deutlich, dass die Kühlleistung einer Umgebungsluftkühlung umso kleiner wird, je geringer die Temperaturdifferenz $\Delta T_L$ zwischen der Kühlluftaustrittstemperatur und der Umgebungslufttemperatur ist. Bei der Kühlung einer Niedrigtemperatur-PEM-Brennstoffzelle, deren Betriebstemperatur üblicherweise zwischen ca. 60 und 110°C, bei einem Leistungsoptimum zwischen ca. 60 und 90°C liegt, besteht daher das Problem, dass die Temperaturdifferenz $\Delta T_L$ zwischen der maximal der Betriebstemperatur der Brennstoffzelle entsprechenden Kühlluftaustrittstemperatur und der Umgebungslufttemperatur relativ gering und die Kühlleistung des Kühlsystems daher entsprechend niedrig ist. Infolge dessen sind für eine ausreichende Wärmeabfuhr von einer PEM-Brennstoffzelle an die Umgebung große Wärmeübertragerflächen erforderlich. Flüssigkeits- und/oder Luftkühlsysteme für PEM-Brennstoffzellen sind daher zwangsläufig großvolumig und haben ein verhältnismäßig hohes Gewicht, was für einen Einsatz in mobilen Anwendungen und insbesondere in der Luftfahrt sehr nachteilig ist. Darüber hinaus muss zur Kühlung einer an Bord eines Flugzeugs eingesetzten PEM-Brennstoffzelle benötigte Kaltluft aus der Flugzeugumgebung angesaugt und nach der Aufnahme der von der Brennstoffzelle erzeugten Reaktionswärme wieder in die Flugzeugumgebung abgeführt werden. Sowohl das Ansaugen der Luft als auch deren Abfuhr in die Flugzeugumgebung verursacht jedoch einen für einen effizienten Flugbetrieb des Flugzeugs nachteiligen erhöhten Luftwiderstand.

Im Gegensatz zu den oben beschriebenen Kühlsystemen, deren Kühlleistung wesentlich von der Differenz zwischen der Temperatur des Kühlmediums und der Umgebungslufttemperatur abhängt, wird die Kühlleistung eines Verdampfungskühlsystems nach Gleichung (5)

$$\dot{Q}_V = \dot{m}_V \cdot \Delta h_V \qquad\qquad (5)$$

durch die Verdampfungsenthalpie $\Delta h_V$ eines in dem Verdampfungskühlsystem eingesetzten Kühlmediums bestimmt, wobei $\dot{Q}_V$ das Wärmeaufnahmevermögen des vom flüssigen in den gasförmigen Aggregatzustand zu überführenden Kühlmediums und $\dot{m}_V$ der Massenstrom des vom flüssigen in den gasförmigen Aggregatzustand zu überführenden Kühlmediums ist.

Ein in einem Verdampfungskühlsystem im Kreislauf geführtes Kühlmedium muss nach dem Verdampfen zwar durch Kondensation wieder in seinen flüssigen Aggregatzustand überführt werden. Eine Abkühlung des Kühlmediums auf eine unterhalb der Betriebstemperatur einer durch das Verdampfungskühlsystem gekühlten Brennstoffzelle liegende Temperatur ist jedoch nicht erforderlich. Darüber hinaus hat ein Verdampfungskühlsystem gegenüber den oben beschriebenen Flüssigkeits- und Luftkühlsystemen den Vorteil, dass die Aggregatzustandsänderung gängiger Kühlmedien, wie z.B. Wasser sehr viel mehr Energie verbraucht als das Kühlmedium in flüssiger Form aufnehmen kann. Ein Verdampfungskühlsystem ist daher mit einem deutlich geringen Kühlmediummassenstrom betreibbar als ein Luftkühlsystem mit vergleichbarer Kühlleistung.

Ein Verdampfungskühlsystem zur Kühlung einer Brennstoffzelle ist beispielsweise aus der DE 199 35 719 A1 bekannt. Bei dem in der DE 199 35 719 A1 beschriebenen Kühlsystem wird ein Kühlmedium, beispielsweise Wasser, durch Kühlrohre geleitet, die in einem Anodengaszufuhrraum sowie einem Anodenabgasraum eines Brennstoffzellenstapels angeordnet sind. Beim Durchströmen der Kühlrohre verdampft das Kühlmedium und nimmt dabei bis zu 90% der von der Brennstoffzelle durch Wärmestrahlung abgegebenen Wärmemenge auf.

Der vorliegenden Erfindung liegt die Aufgabe zugrunde, ein verdampfungsgekühltes Brennstoffzellensystem bereitzustellen, das insbesondere zum Einsatz in einem Flugzeug geeignet ist. Ferner liegt der Erfindung die Aufgabe zugrunde, ein Verfahren zum Betreiben eines derartigen verdampfungsgekühlten Brennstoffzellensystems anzugeben.

Diese Aufgabe wird durch ein Brennstoffzellensystem mit den im Anspruch 1 angegebenen Merkmalen sowie ein Verfahren zum Betreiben eines Brennstoffzellensystems mit den in Anspruch 11 angegebenen Merkmalen gelöst.

Ein erfindungsgemäßes Brennstoffzellensystem umfasst eine Brennstoffzelle, vorzugsweise eine Brennstoffzelle der MW-Leistungsklasse, wobei hier mit dem Begriff "Brennstoffzelle" nicht nur eine Einzelzelle, sondern auch ein eine Mehrzahl von Einzelzellen umfassender Brennstoffzellenstapel bezeichnet wird. Die Brennstoffzelle ist vorzugsweise eine PEM-Brennstoffzelle, deren Anodenbereich mit einer Wasserstoffquelle in Verbindung steht und deren Kathodenseite ein sauerstoffhaltiges Oxidationsmittel, vorzugsweise Luft, zugeführt wird. Der dem Anodenbereich der Brennstoffzelle zuzuführende Brennstoff, vorzugsweise Wasserstoff, kann in einem in das erfindungsgemäße Brennstoffzellensystem integrierten Brennstofftank gespeichert sein. Alternativ oder zusätzlich dazu kann das erfindungsgemäße Brennstoffzellensystem eine Brennstofferzeugungsanlage zur Erzeugung des dem Anodenbereich der Brennstoffzelle zuzuführenden Brennstoffs umfassen. Die Kathodenseite der Brennstoffzelle kann mit einer Druckseite eines Kompressors verbunden sein. Der Kompressor kann ein Kompressor mit kombiniertem Luft- und Dampfeinlauf sein.

Die Brennstoffzelle kann eine Niedrigtemperatur-PEM-Brennstoffzelle oder eine Hochtemperatur-PEM-Brennstoffzelle, eine einen Composite-Elektrolyt mit anorganischem Material enthaltende PEM-Brennstoffzelle, eine Polybenzimidazol-PEM-Brennstoffzelle oder eine Polyperfluorsulfonsäure-PEM-Brennstoffzelle sein. Im Betrieb erzeugt die Brennstoffzelle neben elektrischer Energie thermische Energie, die von der Brennstoffzelle abgeführt werden muss, um eine Überhitzung der Brennstoffzelle zu verhindern.

Das erfindungsgemäße Brennstoffzellensystem umfasst daher ferner ein Verdampfungskühlsystem, das in Wärmekontakt mit der Brennstoffzelle steht, um im Betrieb der Brennstoffzelle von der Brennstoffzelle erzeugte Wärme durch Verdampfen eines Kühlmediums aufzunehmen und von der Brennstoffzelle abzuführen. Wie oben erläutert, zeichnet sich ein Verdampfungskühlsystem aufgrund der hohen zur Überführung des Kühlmediums vom flüssigen in den gasförmigen Aggregatzustand erforderlichen Verdampfungsenthalpie durch ein hohes Wärmeaufnahmevermögen und damit eine exzellente Kühlleistung aus. Das Verdampfungskühlsystem des erfindungsgemäßen Brennstoffzellensystems ist daher im Vergleich zu einem Luft- oder Flüssigkeitskühlsystem mit einem ähnlichen Wärmeaufnahmevermögen mit einem deutlich geringeren Kühlmediummassenstrom betreibbar und weist überdies eine kompakte Bauweise sowie ein geringes Gewicht auf. Ferner weist das Verdampfungskühlsystem geringe Energieverluste auf, verursacht bei einem Einsatz des erfindungsgemäßen Brennstoffzellensystems an Bord eines Flugzeugs keinen zusätzlichen Luftwiderstand und ist dazu in der Lage die Brennstoffzelle auch bei Betriebslastspitzen zuverlässig und eigenständig mit Kühlleistung zu versorgen. Schließlich kann in dem Verdampfungskühlsystem des erfindungsgemäßen Brennstoffzellensystems eine hohe Systemdynamik realisiert werden, da die Expansion des Kühlmediums bei der Verdampfung einen schnellen Abtransport des Kühlmediums aus dem mit der Brennstoffzelle in Wärmekontakt stehenden Bereich des Verdampfungskühlsystems ermöglicht.

Das Verdampfungskühlsystem des erfindungsgemäßen Brennstoffzellensystems kann als von der Brennstoffzelle separat ausgebildetes System ausgeführt sein. Vorzugsweise ist das Verdampfungskühlsystem jedoch zumindest teilweise in Komponenten der Brennstoffzelle integriert und umfasst beispielsweise in Bipolarplatten, Separatorplatten, Deckplatten und/oder seitlichen Begrenzungsplatten der Brennstoffzelle bzw. des Brennstoffzellenstapels ausgebildete Kühlkanäle. Alternativ oder zusätzlich dazu können sich Kühlkanäle des Verdampfungskühlsystems auch in einem Anodengaszufuhrraum, einem Kathodengaszufuhrraum, einem Anodenabgasraum und/oder einem Kathodenabgasraum der Brennstoffzelle erstrecken. Die Kühlkanäle des Verdampfungskühlsystems werden von dem Kühlmedium durchströmt, das dabei durch Aufnahme der von der Brennstoffzelle im Betrieb erzeugten Wärme vom flüssigen in den gasförmigen Aggregatzustand überführt wird. Als Kühlmedium kann beispielsweise Wasser eingesetzt werden, das beim Durchströmen der Kühlkanäle des Verdampfungskühlsystems durch Blasensieden verdampft wird.

Das erfindungsgemäße Brennstoffzellensystem umfasst ferner eine Einrichtung zur Erfassung des Drucks in dem Verdampfungskühlsystem, d.h. in den Teilen des Verdampfungskühlsystems, in denen das Kühlmedium vom flüssigen in den gasförmigen Aggregatzustand überführt wird. Wenn das Verdampfungskühlsystem, d.h. die Teile des Verdampfungskühlsystems, in denen das Kühlmedium vom flüssigen in den gasförmigen Aggregatzustand überführt wird, mit der Umgebung des Verdampfungskühlsystems verbunden ist/sind, kann die Druckerfassungseinrichtung dazu eingerichtet und so angeordnet sein, dass sie den Umgebungsdruck in der Umgebung des Verdampfungskühlsystems und/oder der Brennstoffzelle erfasst. Als Druckerfassungseinrichtung kann beispielsweise ein Drucksensor eingesetzt werden. Die Druckerfassungseinrichtung liefert für den Druck in dem Verdampfungskühlsystem charakteristische Signale an eine beispielsweise als elektronische Steuereinheit ausgebildete Steuereinheit.

Die Steuereinheit des erfindungsgemäßen Brennstoffzellensystems ist dazu eingerichtet, die Betriebstemperatur der Brennstoffzelle in Abhängigkeit der Signale, die der Steuereinheit von der Einrichtung zur Erfassung des Drucks in dem Verdampfungskühlsystem zugeführt werden, derart zu steuern, dass das Kühlmedium des Verdampfungskühlsystems durch die im Betrieb der Brennstoffzelle von der Brennstoffzelle erzeugte Wärme vom flüssigen in den gasförmigen Aggregatzustand überführt wird. Mit anderen Worten, die Steuereinheit ist dazu eingerichtet, die Betriebstemperatur der Brennstoffzelle in Abhängigkeit des Drucks in dem Verdampfungskühlsystem, d.h. in den Teilen des Verdampfungskühlsystems, in denen das Kühlmedium verdampft wird, so zu steuern, dass stets gewährleistet ist, dass die im Betrieb der Brennstoffzelle von der Brennstoffzelle erzeugte Wärme ausreicht, um das Kühlmedium des Verdampfungskühlsystems vom flüssigen in den gasförmigen Aggregatzustand zu überführen. Dadurch wird stets eine ordnungsgemäße Funktion des Verdampfungskühlsystems gewährleistet. In dem erfindungsgemäßen Brennstoffzellensystem liegt die Temperatur des Kühlmediums nach der Aufnahme der von der Brennstoffzelle erzeugten Wärme knapp unter der Betriebstemperatur der Brennstoffzelle, so dass ein hoher Wärmeübergang und damit eine besonders gute Kühlleistung des Verdampfungskühlsystems realisiert wird. Darüber hinaus ermöglicht die im Wesentlichen isotherme Aggregatzustandsänderung des Kühlmediums einen stabilen Betrieb des Verdampfungskühlsystems.

Die Verdampfungstemperatur üblicher Kühlmedien, wie z.B. Wasser, sinkt mit sinkendem Druck. Beispielsweise liegt die Verdampfungstemperatur von Wasser bei einem dem Atmosphärendruck auf Meeresspiegelhöhe (1,0132 bar) entsprechenden Druck bei 100˚C. Bei einem Druck von 0,1992 bar, wie er in einer Höhe von 12192 m (40000 Fuß), d.h. der Reiseflughöhe eines Verkehrsflugzeugs, vorliegt, beträgt die Verdampfungstemperatur von Wasser dagegen lediglich 60˚C. Wenn das Verdampfungskühlsystem eines erfindungsgemäßen Brennstoffzellensystems mit Wasser als Kühlmedium betrieben wird, muss folglich bei einem dem Atmosphärendruck auf Meeresspiegelhöhe entsprechenden Druck in dem Verdampfungskühlsystem die Betriebstemperatur der Brennstoffzelle so hoch gewählt werden, dass die im Betrieb von der Brennstoffzelle erzeugte Wärme ausreicht, um das Kühlmedium des Verdampfungskühlsystems auf über 100˚C zu erhitzen und dadurch für eine ordnungsgemäße Funktion des Verdampfungskühlsystems zu sorgen. Wenn der Druck in dem Verdampfungskühlsystem dagegen lediglich 0,1992 bar beträgt, kann die Brennstoffzelle mit einer geringeren Betriebstemperatur betrieben werden, da die von der Brennstoffzelle im Betrieb erzeugte Wärme lediglich ausreichen muss, um das Kühlmedium auf 60˚C zu erhitzen.

Eine Niedrigtemperatur-PEM-Brennstoffzelle erreicht ihr Leistungsoptimum, wenn sie bei einer Betriebstemperatur zwischen ca. 60 und 90˚C betrieben wird. Wenn bei dem erfindungsgemäßen Brennstoffzellensystem mit Hilfe der Druckerfassungseinrichtung festgestellt wird, dass in dem Verdampfungskühlsystem beispielsweise aufgrund eines gegenüber dem Atmosphärendruck auf Meeresspiegelhöhe verringerten Umgebungsdrucks ein ausreichend geringer Druck vorliegt, kann die Steuereinheit die Betriebstemperatur der Brennstoffzelle soweit senken, dass eine optimale Leistung der Brennstoffzelle erreicht wird, die von der Brennstoffzelle im Betrieb erzeugte Wärme jedoch immer noch ausreichend ist, um das Kühlmedium des Verdampfungskühlsystems vom flüssigen in den gasförmigen Aggregatzustand zu überführen und somit eine ordnungsgemäße Funktion des Verdampfungskühlsystems zu gewährleisten.

Ein Flugzeug befindet sich im Flugbetrieb vorwiegend in einer Umgebung, in der der Umgebungsdruck unterhalb des Atmosphärendrucks auf Meeresspiegelhöhe liegt. Diese Tatsache kann in einem an Bord eines Flugzeugs eingesetzten erfindungsgemäßen Brennstoffzellensystem in besonders vorteilhafter Weise dazu genutzt werden, die Betriebstemperatur der Brennstoffzelle für einen überwiegenden Teil der Betriebsdauer der Brennstoffzelle unter 100˚C, möglichst jedoch im optimalen Betriebstemperaturbereich zwischen ca. 60 und 90˚C zu halten. Hierfür ist es lediglich erforderlich, das Verdampfungskühlsystem, d.h. die Teile des Verdampfungskühlsystems, in denen das Kühlmedium verdampft wird, im unbedruckten Bereich des Flugzeugs anzuordnen und mit der Umgebungsatmosphäre zu verbinden, so dass in diesen Teilen des Verdampfungskühlsystems der verringerte Umgebungsdruck in der Umgebung des Flugzeugs vorliegt.

Beispielsweise kann die Steuereinheit die Betriebstemperatur der Brennstoffzelle eines an Bord eines Flugzeugs eingesetzten erfindungsgemäßen Brennstoffzellensystems bei einer konstanten, möglichst im optimalen Betriebstemperaturbereich der Brennstoffzelle liegenden Temperatur halten, solange sich das Flugzeug in einer konstanten Reiseflughöhe befindet. Im Steigflug des Flugzeugs kann die Steuereinheit die Betriebstemperatur der Brennstoffzelle dagegen in Abhängigkeit des sinkenden Umgebungsdrucks senken, während sie die Betriebstemperatur der Brennstoffzelle im Sinkflug des Flugzeugs in Abhängigkeit des steigenden Umgebungsdrucks erhöhen kann.

Wenn in dem Verdampfungskühlsystem des erfindungsgemäßen Brennstoffzellensystems Wasser als Kühlmedium eingesetzt ist, kann die Steuereinheit die Betriebstemperatur der Brennstoffzelle beispielsweise bei ca. 60˚C halten, wenn sich das Flugzeug in einer konstanten Reiseflughöhe von ca. 12192 m (40000 Fuß) befindet. Im Steigflug des Flugzeugs von einem sich ca. auf Meeresspiegelhöhe befindenden Startort bis zum Erreichen der Reiseflughöhe kann die Steuereinheit die Betriebstemperatur der Brennstoffzelle beispielsweise in Abhängigkeit des sinkenden Umgebungsdrucks während des Steigflugs kontinuierlich von ca. 100˚C auf ca. 60˚C verringern. Im Sinkflug des Flugzeugs von der Reiseflughöhe bis zu einem ca. auf Meeresspiegelhöhe liegenden Landeort kann die Steuereinheit die Betriebstemperatur der Brennstoffzelle dagegen in Abhängigkeit des steigenden Umgebungsdrucks kontinuierlich von ca. 60˚C auf ca. 100˚C erhöhen.

Bei einer bevorzugten Ausführungsform des erfindungsgemäßen Brennstoffzellensystems ist die Steuereinheit dazu eingerichtet, die Betriebstemperatur der Brennstoffzelle in Abhängigkeit der Signale, die der Steuereinheit von der Einrichtung zur Erfassung des Drucks in dem Verdampfungskühlsystem zugeführt werden, derart zu steuern, dass die Verdampfung des Kühlmediums des Verdampfungskühlsystems durch die im Betrieb der Brennstoffzelle von der Brennstoffzelle erzeugte Wärme im Nassdampfgebiet des Kühlmediums erfolgt. Unter "Nassdampf" wird hier ein System verstanden, in dem siedende Flüssigkeit und gesättigter Dampf im Gleichgewicht stehen.

Wenn die Verdampfung des im Verdampfungskühlsystem des erfindungsgemäßen Brennstoffzellensystems eingesetzten Kühlmediums im Nassdampfgebiet des Kühlmediums erfolgt, steht während der Verdampfung des Kühlmediums siedendes Kühlmedium im flüssigen Aggregatzustand mit gesättigtem Dampf des Kühlmediums im Gleichgewicht. Dies ist dann der Fall, wenn das Kühlmedium bei der Verdampfung auf seine druckabhängige Verdampfungstemperatur erhitzt wird. Die Steuereinrichtung steuert die Betriebstemperatur der Brennstoffzelle somit vorzugsweise in der Weise, dass das Kühlmedium des Verdampfungskühlsystems auf eine der druckabhängigen Verdampfungstemperatur des Kühlmediums entsprechende Temperatur erhitzt wird. Beispielsweise kann die Brennstoffzelle bei einer um 0 bis 5˚C, vorzugsweise 1 bis 3˚C oberhalb der druckabhängigen Verdampfungstemperatur des Kühlmediums des Verdampfungskühlsystems liegenden Betriebstemperatur betrieben werden.

Das erfindungsgemäße Brennstoffzellensystem umfasst vorzugsweise ferner ein Brennstoffzellenbetriebsdruckerzeugungssystem, das dazu eingerichtet ist, in der Brennstoffzelle, d.h. den Komponenten der Brennstoffzelle, in die keine Kühlkanäle des Verdampfungskühlsystems integriert sind, einen gewünschten Druck zu erzeugen. Das Brennstoffzellenbetriebsdruckerzeugungssystem des erfindungsgemäßen Brennstoffzellensystems kann beispielsweise in ein Medienversorgungssystem des Brennstoffzellensystems integriert sein und einen Kompressor zur Oxidationsmittelzufuhr in den Kathodenbereich der Brennstoffzelle und/oder eine entsprechende Fördereinrichtung zur Brennstoffzufuhr in den Anodenbereich der Brennstoffzelle umfassen. Das Brennstoffzellenbetriebsdruckerzeugungssystem dient dazu, den Brennstoffzellenbetriebsdruck, unabhängig vom Umgebungsdruck in der Umgebung der Brennstoffzelle und vom Druck in dem Verdampfungskühlsystem auf ein gewünschtes Niveau zu bringen bzw. auf einem gewünschten Niveau zu halten.

Das Brennstoffzellenbetriebsdruckerzeugungssystem kann dazu eingerichtet sein, in der Brennstoffzelle einen gegenüber dem Umgebungsdruck in der Umgebung der Brennstoffzelle und/oder dem Druck im Verdampfungskühlsystem verringerten oder erhöhten Druck zu erzeugen. Ferner kann das erfindungsgemäße Brennstoffzellensystem eine beispielsweise in Form einer elektronischen Steuereinheit ausgebildete Steuereinheit zur Steuerung des Brennstoffzellenbetriebsdruckerzeugungssystem umfassen. Die Steuereinheit zur Steuerung des Brennstoffzellenbetriebsdruckerzeugungssystems kann eine separate Steuereinheit sein. Alternativ dazu kann die Steuereinheit zur Steuerung des Brennstoffzellenbetriebsdruckerzeugungssystems jedoch auch in die Steuereinheit zur Steuerung der Betriebstemperatur der Brennstoffzelle integriert sein.

Wie oben erläutert, wird bei dem erfindungsgemäßen Brennstoffzellensystem die Betriebstemperatur der Brennstoffzelle in Abhängigkeit des Drucks in dem Verdampfungskühlsystem stets so gesteuert, dass das Kühlmedium des Verdampfungskühlsystems durch die im Betrieb der Brennstoffzelle von der Brennstoffzelle erzeugte Wärme vom flüssigen in den gasförmigen Zustand überführt wird. Bei entsprechend hohen Betriebstemperaturen kann jedoch das Problem auftreten, dass in der Brennstoffzelle, d.h. beispielsweise im Anodenbereich, im Kathodenbereich, im Bereich einer den Anodenbereich vom Kathodenbereich trennenden Membran, in den Anodengasleitungen oder den Kathodengasleitungen üblicherweise in flüssiger Form vorhandene Stoffe und/oder Stoffgemische, wie z.B. Wasser verdampfen.

Um im Betrieb der Brennstoffzelle eine unerwünschte Verdampfung von in der Brennstoffzelle üblicherweise in flüssiger Form vorhandenen Stoffen und/oder Stoffgemischen zu verhindern, ist die Steuereinheit zur Steuerung des Brennstoffzellenbetriebsdruckerzeugungssystems vorzugsweise dazu eingerichtet, das Brennstoffzellenbetriebsdruckerzeugungssystem so zu steuern, dass in der Brennstoffzelle ein Druck erzeugt wird, bei dem ein unerwünschtes Verdampfen von in der Brennstoffzelle üblicherweise in flüssiger Form vorhandenen Stoffen und/oder Stoffgemischen verhindert wird.

Die Steuereinheit zur Steuerung des Brennstoffzellenbetriebsdruckerzeugungssystems kann dazu eingerichtet sein, den Brennstoffzellenbetriebsdruck in Abhängigkeit von der Betriebstemperatur der Brennstoffzelle zu steuern. Die von der Steuereinheit zur Steuerung des Brennstoffzellenbetriebsdruckerzeugungssystems als Steuergröße eingesetzte Betriebstemperatur der Brennstoffzelle kann eine von der Steuereinheit zur Steuerung der Betriebstemperatur der Brennstoffzelle bereitgestellte Soll-Betriebstemperatur der Brennstoffzelle oder eine, beispielsweise mittels eines Temperatursensors, gemessenen Betriebstemperatur der Brennstoffzelle sein. Alternativ oder zusätzlich dazu kann die Steuereinheit zur Steuerung des Brennstoffzellenbetriebsdruckerzeugungssystems jedoch auch dazu eingerichtet sein, den Brennstoffzellenbetriebsdruck in Abhängigkeit von Signalen zu steuern, die ihr von der Einrichtung zur Erfassung des Drucks in dem Verdampfungskühlsystem zugeführt werden. Beispielsweise kann die Steuereinheit zur Steuerung des Brennstoffzellenbetriebsdruckerzeugungssystems anhand der für den Druck in dem Verdampfungskühlsystem charakteristischen Signale der Druckerfassungseinrichtung eine Soll-Betriebstemperatur der Brennstoffzelle errechnen und als Steuergröße für die Ermittlung eines geeigneten Soll-Betriebsdrucks in der Brennstoffzelle nutzen.

Wenn in dem Verdampfungskühlsystem des erfindungsgemäßen Brennstoffzellensystems Wasser als umweltfreundliches Kühlmedium verwendet wird, wird die beispielsweise als PEM-Brennstoffzelle ausgebildete Brennstoffzelle bei einem ca. dem Atmosphärendruck auf Meeresspiegelhöhe entsprechenden Druck im dem Verdampfungskühlsystem vorzugsweise bei einer Betriebstemperatur von ca. 100 bis 105°C betrieben. Die Steuereinheit zur Steuerung des Brennstoffzellenbetriebsdruckerzeugungssystems steuert das Brennstoffzellenbetriebsdruckerzeugungssystem dann vorzugsweise so, dass in der Brennstoffzelle ein über dem Atmosphärendruck auf Meeresspiegelhöhe liegender Druck von beispielsweise 2 bar erzeugt wird. Bei einem Druck von 2 bar liegt die Verdampfungstemperatur von Wasser bei 120,23°C, so dass ein Verdampfen von in der Brennstoffzelle, d.h. beispielsweise im Anodenbereich, im Kathodenbereich, im Bereich einer den Anodenbereich vom Kathodenbereich trennenden Membran, in den Anodengasleitungen oder den Kathodengasleitungen vorhandenem Wasser bei der Betriebstemperatur der Brennstoffzelle sicher vermieden wird.

Wie oben erläutert, können durch den in dem Verdampfungskühlsystem des erfindungsgemäßen Brennstoffzellensystems stattfindenden Verdampfungsvorgang große Wärmemengen von der Brennstoffzelle abgeführt werden. Die von dem Verdampfungskühlsystem von der Brennstoffzelle abgeführte Wärme muss anschließend entweder an die Umgebung abgegeben oder einer weiteren Nutzung zugeführt werden. Ein Wärmeübertragungsvorgang lässt sich durch Gleichung (6)

$$\dot{Q} = k \cdot A \cdot \Delta t_{m\log} \qquad\qquad (6)$$

beschreiben, wobei $Q$ die übertragene Wärmeleistung, $k$ der Wärmedurchgangskoeffizient, A die Wärmeübertragerfläche und $\Delta t_{m\log}$ das Temperaturgefälle ist. Der Wärmedurchgangskoeffizient k berechnet sich nach Gleichung (7)

$$1/k = 1/\alpha_{außen} + s/\lambda + 1/\alpha_{innen} \qquad\qquad (7)$$

wobei s die Wanddicke, $\lambda$ der Wärmeleitfähigkeitskoeffizient und $\alpha$ der Wärmeübergangskoeffizient ist.

Der Wärmeübergangskoeffizient $\alpha$ wird als Haupteinflussgröße auf die im Zuge eines Wärmeübertragungsprozesses zu übertragende Wärmeleistung $\dot{Q}$ gesehen. Ein großer Wärmeübergangskoeffizient $\alpha$ wird bei einem Kondensationsprozess erzielt. Das Verdampfungskühlsystem des erfindungsgemäßen Brennstoffzellensystems umfasst daher vorzugsweise einen Kondensator zur Kondensation des im Betrieb der Brennstoffzelle zur Kühlung der Brennstoffzelle verdampften Kühlmediums. Bei einer derartigen Ausgestaltung des Verdampfungskühlsystems erfolgt die Aufnahme der Brennstoffzellenreaktionswärme durch Verdampfung, während die Abgabe der Brennstoffzellenreaktionswärme durch einen Kondensationsprozess realisiert wird. Da ein Kondensationsprozess, ähnlich wie ein Verdampfungsprozess, sehr viel mehr Energie verbraucht als beispielsweise ein Kühlmedium in flüssiger Form aufnehmen kann, arbeitet ein mit einem Kondensator ausgestattetes Verdampfungskühlsystem besonders effizient.

Ein weiterer Vorteil eines mit einem Kondensator ausgestatteten Verdampfungskühlsystems besteht darin, dass es als Kreislaufsystem betrieben werden kann, bei dem in dem Kondensator kondensiertes Kühlmedium in flüssigem Aggregatzustand wieder zu der Brennstoffzelle zurückgeführt und dort zur Kühlung der Brennstoffzelle erneut verdampft werden kann. Vorzugsweise ist in einem mit einem Kondensator ausgestatteten Verdampfungskühlsystem jedoch die Brennstoffzellenkühlfunktion von der Kühlmediumrückgewinnungsfunktion entkoppelt, so dass auch bei einem Ausfall des Kondensators eine ausreichende Kühlung der Brennstoffzelle gewährleistet ist. Um eine ausreichende Versorgung des Verdampfungskühlsystems mit Kühlmedium zu gewährleisten, kann das erfindungsgemäße Brennstoffzellensystem eine Vorrichtung zur Zuführung von im Betrieb der Brennstoffzelle erzeugtem Wasser in das Verdampfungskühlsystem umfassen.

Die mittels des Verdampfungskühlsystems von der Brennstoffzelle abgeführte Wärme kann an die Umgebung abgegeben werden. Dies ist insbesondere dann sinnvoll, wenn die Wärme auf einem vergleichsweise niedrigen Temperaturniveau von beispielsweise 60°C anfällt.

Ein Kondensator, der eine effiziente Abfuhr der von der Brennstoffzelle des erfindungsgemäßen Brennstoffzellensystems erzeugten Abwärme an die Umgebung ermöglicht, kann beispielsweise in Form eines Außenhautkühlers ausgebildet sein. Der Außenhautkühler kann beispielsweise durch eine Wand gebildet werden, deren dem Brennstoffzellensystem zugewandte Innenseite mit dampfförmigem Kühlmedium beaufschlagt wird und als Brüdenkondensator arbeitet. Eine der Umgebung zugewandte Außenseite der den Außenhautkühler bildenden Wand arbeitet dagegen als Umgebungsluftheizung. Ein als Außenhautkühler ausgebildeter Kondensator bietet sich insbesondere zur Verwendung in einem an Bord eines Flugzeugs eingesetzten erfindungsgemäßen Brennstoffzellensystem an. Der Außenhautkühler kann dann beispielsweise durch einen Abschnitt der Flugzeugaußenhaut gebildet werden, der auf seiner Innenseite mit im Betrieb der Brennstoffzelle zur Kühlung der Brennstoffzelle verdampftem Kühlmedium beaufschlagt wird.

Wenn ein Abschnitt der Flugzeugaußenhaut als Außenhautkühler eingesetzt wird, können auf einfache Art und Weise und ohne zusätzliche Komponenten große Wärmeübertragerflächen geschaffen werden. Dadurch ergibt sich ein erheblicher Gewichtsvorteil. Darüber hinaus zeichnet sich ein beispielsweise durch einen Abschnitt der Flugzeugaußenhaut gebildeter Außenhautkühler durch eine hohe Kühlleistung aus und ermöglicht durch den Verzicht auf Rohrleitungen die Realisierung weiterer Gewichtsvorteile. Darüber hinaus ist die Wärmeabfuhr mittels eines Außenhautkühlers geräuscharm und erfordert keine großen Luftmassenbewegungen, die bei einem Einsatz des erfindungsgemäßen Brennstoffzellensystems in einem Flugzeug zu einem unerwünschten zusätzlichen Luftwiderstand führen könnten. Schließlich wird eine Störung der Loft vermieden.

Alternativ oder zusätzlich zu einer Abfuhr der von der Brennstoffzelle des erfindungsgemäßen Brennstoffzellensystems im Betrieb erzeugten Reaktionswärme an die Umgebung kann die von der Brennstoffzelle erzeugte Reaktionswärme auch rückgewonnen und genutzt werden. Zu diesem Zweck kann das erfindungsgemäße Brennstoffzellensystem mindestens eine Einrichtung zur Nutzung von in dem Kühlmedium gespeicherter Wärme umfassen. Die Nutzung der in dem Kühlmedium gespeicherten Wärme kann direkt oder indirekt erfolgen. Beispielsweise kann das Kühlmedium im gasförmigen Aggregatzustand unmittelbar der Einrichtung zur Nutzung der in dem Kühlmedium gespeicherten Wärme zugeführt werden. Bei diesem Vorgang dem Verdampfungskühlsystem entzogenes Kühlmedium muss jedoch in das Verdampfungskühlsystem nachgefördert werden, um eine ordnungsgemäße Kühlung der Brennstoffzelle zu gewährleisten.

Alternativ oder zusätzlich ist es auch denkbar, lediglich die in dem Kühlmedium gespeicherte Wärme an die Einrichtung zur Nutzung dieser Wärme zu übertragen. Zu diesem Zweck kann das Kühlmedium im gasförmigen Aggregatzustand beispielsweise durch einen Wärmetauscher geleitet werden, der mit der Einrichtung zur Nutzung der in dem Kühlmedium gespeicherten Wärme in Wärmekontakt steht. Ferner kann ein in dem Verdampfungskühlsystem vorgesehener Kondensator so ausgebildet und/oder angeordnet sein, dass die bei der Kondensation des Kühlmediums in dem Kondensator frei werdende Wärme an die Einrichtung zur Nutzung der in dem Kühlmedium gespeicherten Wärme übertragen wird.

Die Einrichtung zur Nutzung der in dem Kühlmedium gespeicherten Wärme kann eine vorzugsweise als Dampfheizung ausgebildete Heizeinrichtung sein, die die in dem Kühlmedium gespeicherte Wärme zu Heizzwecken nutzt. Alternativ dazu kann die Einrichtung zur Nutzung der in dem Kühlmedium gespeicherten Wärme jedoch auch eine Wasserentsalzungsanlage zur Gewinnung von Trinkwasser aus Meerwasser sein. Bei einem zum Einsatz in einem Flugzeug vorgesehenen erfindungsgemäßen Brennstoffzellensystem ist die Einrichtung zur Nutzung der in dem Kühlmedium gespeicherten Wärme vorzugsweise eine Enteisungsanlage des Flugzeugs.

Schließlich ist es denkbar, das in dem Verdampfungskühlsystem als Kühlmedium genutzte Wasser in einer Anlage zur Zuführung von Wasser und/oder Wasserdampf in einen Abgasstrom eines Flugzeugs zu nutzen. Dadurch kann der Schadstoffausstoß eines Flugzeugtriebwerks gemindert werden.

Eine bevorzugte Ausführungsform des erfindungsgemäßen Brennstoffzellensystems umfasst vorzugsweise ferner eine Vorrichtung zur Abfuhr des Kühlmediums an die Umgebung. Vorzugsweise ist eine derartige Vorrichtung zur Abfuhr des Kühlmediums an die Umgebung dazu eingerichtet, das Kühlmedium im gasförmigen Aggregatzustand an die Umgebung abzuführen, wenn die in dem Kühlmedium gespeicherte Wärme nicht in ausreichendem Maße an die Umgebung abgeführt oder anderweitig genutzt werden kann. Die Vorrichtung zur Abfuhr des Kühlmediums an die Umgebung kann beispielsweise in Form eines Auslassventils ausgebildet sein und gewährleistet selbst dann einen sicheren Betrieb des erfindungsgemäßen Brennstoffzellensystems, wenn die Abfuhr der in dem Kühlmedium gespeicherten Wärme beispielsweise aufgrund hoher Umgebungstemperaturen oder Windstille erschwert ist.

Bei einem erfindungsgemäßen Verfahren zum Betreiben eines Brennstoffzellensystems mit einer Brennstoffzelle und einem Verdampfungskühlsystem, das in Wärmekontakt mit der Brennstoffzelle steht, um im Betrieb der Brennstoffzelle von der Brennstoffzelle erzeugte Wärme durch Verdampfen eines Kühlmediums aufzunehmen und von der Brennstoffzelle abzuführen, wird der Druck in dem Verdampfungskühlsystems mittels einer geeigneten Druckerfassungseinrichtung erfasst. Die Betriebstemperatur der Brennstoffzelle wird mittels einer Steuereinheit in Abhängigkeit von Signalen gesteuert, die der Steuereinheit von der Druckerfassungseinrichtung zugeführt werden. Die Steuerung der Betriebstemperatur der Brennstoffzelle erfolgt in der Weise, dass das Kühlmedium des Verdampfungskühlsystems durch die im Betrieb der Brennstoffzelle von der Brennstoffzelle erzeugte Wärme vom flüssigen in den gasförmigen Aggregatzustand überführt wird.

Vorzugsweise wird die Betriebstemperatur der Brennstoffzelle in Abhängigkeit der Signale, die der Steuereinheit von der Druckerfassungseinrichtung zugeführt werden, derart gesteuert, dass die Verdampfung des Kühlmediums des Verdampfungskühlsystems durch die im Betrieb der Brennstoffzelle von der Brennstoffzelle erzeugte Wärme im Nassdampfgebiet des Kühlmediums erfolgt.

Bei einer bevorzugten Ausführungsform des erfindungsgemäßen Verfahrens zum Betreiben eines Brennstoffzellensystems wird mittels eines Brennstoffzellenbetriebsdruckerzeugungssystems in der Brennstoffzelle ein gewünschter Druck erzeugt. Beispielsweise wird mittels des Brennstoffzellenbetriebsdruckerzeugungssystems im Anodenbereich, im Kathodenbereich, im Bereich einer den Anodenbereich vom Kathodenbereich trennenden Membran, in den Anodengasleitungen und den Kathodengasleitungen der Brennstoffzelle ein gewünschter Druck erzeugt.

Das Brennstoffzellenbetriebsdruckerzeugungssystem kann mittels einer Steuereinheit zur Steuerung des Brennstoffzellenbetriebsdruckerzeugungssystems so gesteuert werden, dass in der Brennstoffzelle ein Druck erzeugt wird, bei dem ein unerwünschtes Verdampfen von in der Brennstoffzelle üblicherweise in flüssiger Form vorliegenden Stoffen und/oder Stoffgemischen verhindert wird.

Vorzugsweise steuert die Steuereinheit zur Steuerung des Brennstoffzellenbetriebsdruckerzeugungssystems den Druck in der Brennstoffzelle in Abhängigkeit der Betriebstemperatur der Brennstoffzelle und/oder in Abhängigkeit der Signale der Druckerfassungseinrichtung zur Erfassung des Drucks in dem Verdampfungskühlsystem.

Das im Betrieb der Brennstoffzelle zur Kühlung der Brennstoffzelle verdampfte Kühlmedium kann in einem Kondensator kondensiert werden. Vorzugsweise wird das Kühlmedium durch einen in Form eines Außenhautkühlers ausgebildeten Kondensator kondensiert.

Alternativ oder zusätzlich dazu kann in dem Kühlmedium gespeicherte Wärme auch mindestens einer Einrichtung zur Nutzung dieser Wärme zugeführt werden. Beispielsweise kann die in dem Kühlmedium gespeicherte Wärme einer Einrichtung zur Nutzung dieser Wärme zugeführt werden, die in Form einer Dampfheizung, einer Wasserentsalzungsanlage oder einer Enteisungsanlage eines Flugzeugs ausgebildet ist.

Ferner kann in dem Verdampfungskühlsystem als Kühlmedium eingesetztes Wasser auch flüssig oder dampfförmig in einen Abgasstrom eines Flugzeugs zugeführt werden.

Vorzugsweise wird das Kühlmedium bei Bedarf, d.h. dann, wenn eine ordnungsgemäße Abfuhr oder Nutzung der in dem Kühlmedium gespeicherten Wärme nicht möglich ist, an die Umgebung abgeführt.

Das erfindungsgemäße Brennstoffzellensystem ist besonders gut für einen Einsatz als Energieversorgungseinheit auf Brennstoffzellenbasis in einem Luftfahrzeug, insbesondere einem Flugzeug geeignet. Beispielsweise kann das Brennstoffzellensystem als Ersatz für die Auxiliary Power Unit (APU) oder die Ram Air Turbine (RAT) oder als Energieversorgungssystem für ein Wing-Anti-Ice-System (WAIS) eingesetzt werden. Um den Bedarf an elektrischer Leistung in einem Flugzeug zu decken, kann ein Brennstoffzellensystem erforderlich sein, das dazu in der Lage ist, 1 MW elektrische Leistung zu erzeugen. Das Verdampfungskühlsystem des erfindungsgemäßen Brennstoffzellensystems ist trotz seines geringen Gewichts und seiner kompakten Bauweise dazu in der Lage, ausreichend Kühlleistung zur Kühlung einer Hochleistungsbrennstoffzelle bereitzustellen. Darüber hinaus ist ein eigenständiger Betrieb des Kühlsystems unabhängig von anderen Flugzeugsystemen, wie z.B. einer Flugzeugklimaanlage möglich. Das erfindungsgemäße Brennstoffzellensystem kann daher an Bord eines Flugzeugs beispielsweise als autarke Notstromversorungseinheit eingesetzt werden.

In einem Flugzeug, das mit dem erfindungsgemäßen Brennstoffzellensystem ausgestattet ist, sind das Brennstoffzellensystem oder zumindest die Teile des Verdampfungskühlsystems, in denen das Kühlmedium verdampft wird, vorzugsweise in einem unbedruckten Bereich des Flugzeugs angeordnet. Solche Bereiche befinden sich im Flugzeug beispielsweise in der Tragwerk/Rumpfverkleidung (Belly-Fairing) und im Rumpfheck.

Drei bevorzugte Ausführungsbeispiele eines erfindungsgemäßen Brennstoffzellensystems werden nun anhand der beigefügten schematischen Figuren näher erläutert, von denen

Figur 1    eine schematische Darstellung einer ersten Ausführungsform eines Brennstoffzellensystems zeigt,

Figur 2    eine schematische Darstellung einer zweiten Ausführungsform eines Brennstoffzellensystems zeigt, und

Figur 3    eine schematische Darstellung einer dritten Ausführungsform eines Brennstoffzellensystems zeigt.

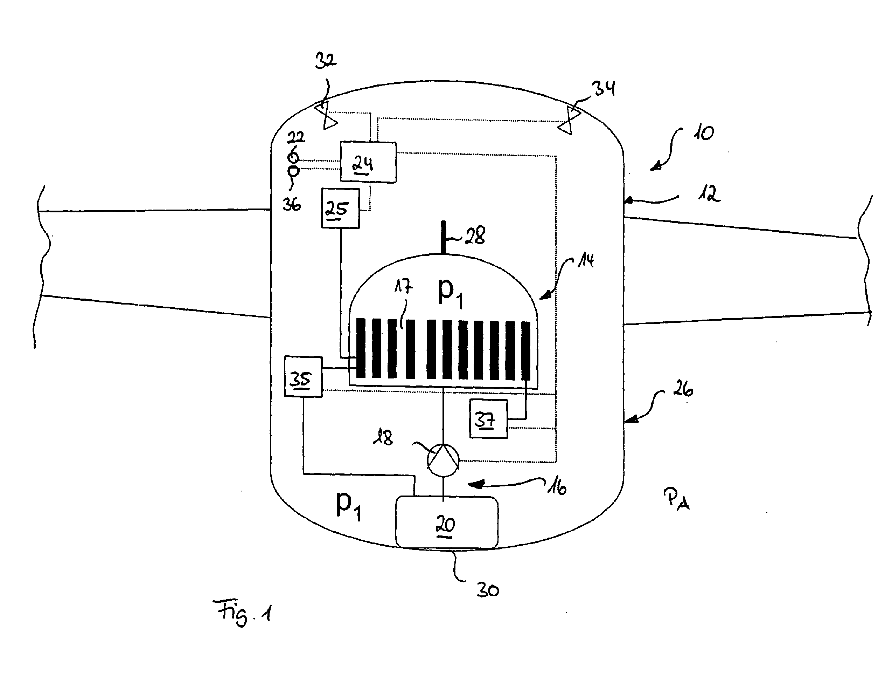

Figur 1 zeigt ein Brennstoffzellensystem 10, das im Belly-Fairing 12, d.h. einem nicht-druckbeaufschlagten Bereich eines Flugzeugs angeordnet ist. Das Brennstoffzellensystem 10 umfasst eine in Form eines Brennstoffzellenstapels ausgebildete Brennstoffzelle 14. Die Brennstoffzelle 14 ist als Niedrigtemperatur-PEM-Brennstoffzelle mit einem Betriebstemperaturbereich zwischen 60 und 110°C ausgebildet. Der optimale Betriebstemperaturbereich der Brennstoffzelle 14 liegt zwischen 60 und 90°C.

Ein zur Kühlung der Brennstoffzelle 14 vorgesehenes Verdampfungskühlsystem 16 umfasst Kühlkanäle 17, die in in Fig. 1 nicht näher veranschaulichten Bipolarplatten der Brennstoffzelle 14 ausgebildet sind. Die Kühlkanäle 17 werden im Betrieb der Brennstoffzelle 14 von als Kühlmedium dienendem Wasser durchströmt. Das Wasser wird den Kühlkanälen 17 in flüssigem Aggregatzustand mittels einer Pumpe 18 von einem Kühlmediumtank 20 zugeführt.

Im Inneren des Belly-Fairing 12 ist ferner ein Drucksensor 22 angeordnet. Der Drucksensor 22 misst den Druck im Inneren des Belly-Fairing 12, der dem Druck in dem Verdampfungskühlsystem 16, d.h. dem Druck in den Kühlkanälen 17 entspricht. Wie bereits erwähnt, gehört das Belly-Fairing 12 zu den nicht-druckbeaufschlagten Bereichen des Flugzeugs, so dass der im Inneren des Belly-Fairing 12 vorliegende und von dem Drucksensor 22 gemessene Druck $p_1$ im Wesentlichen dem Umgebungsdruck $p_A$ in der Umgebung des Flugzeugs entspricht. Im Flugbetrieb des Flugzeugs und insbesondere dann, wenn sich das Flugzeug in seiner Reiseflughöhe befindet, ist dieser Druck deutlich geringer als der Atmosphärendruck auf Meeresspiegelhöhe.

Von dem Drucksensor 22 ausgegebene und für den Umgebungsdruck im Inneren des Belly-Fairing 12 charakteristische Signale werden einer elektronischen Steuereinheit 24 zugeführt. Anhand der Signale des Drucksensors 22 steuert die elektronische Steuereinheit 24 die Betriebstemperatur der Brennstoffzelle 14 in der Weise, dass das Wasser beim Durchströmen der in den Bipolarplatten der Brennstoffzelle 14 ausgebildeten Kühlkanäle 17 vom flüssigen in den gasförmigen Aggregatzustand überführt wird. Durch die Verdampfung des die Kühlkanäle 17 durchströmenden Wassers wird die von der Brennstoffzelle 14 im Betrieb erzeugte Reaktionswärme von dem als Kühlmedium dienenden Wasser aufgenommen.

Insbesondere steuert die elektronische Steuereinheit 24 die Betriebstemperatur der Brennstoffzelle 14 in Abhängigkeit der der Steuereinheit 24 von dem Drucksensor 22 zugeführten Signale in der Weise, dass die Verdampfung des die Kühlkanäle 17 des Verdampfungskühlsystems 16 durchströmenden Wassers durch die von der Brennstoffzelle 14 im Betrieb erzeugte Reaktionswärme im Nassdampfgebiet erfolgt. Um dies zu erreichen, steuert die Steuereinheit 24 die Betriebstemperatur der Brennstoffzelle 14 stets so, dass die Betriebstemperatur der Brennstoffzelle 14 um 0 bis 5°C über der druckabhängigen Verdampfungstemperatur des Kühlmediums Wasser liegt.

Die Betriebstemperatur der Brennstoffzelle 14 wird somit von der Steuereinheit 24 in Abhängigkeit der Flughöhe des Flugzeugs und dem daraus resultierenden Druck im Belly-Fairing 12 so gesteuert, dass sie stets der druckabhängigen Verdampfungskurve des Kühlmediums Wasser folgt. Entsprechende Werte für die Siede- oder Verdampfungstemperatur sowie den Siede- oder Verdampfungsdruck des Kühlmediums Wasser in Abhängigkeit der Flughöhe des Flugzeugs sind Tabelle 1 zu entnehmen.

Tabelle 1: Siedetemperatur und Siededruck des Kühlmediums Wasser in Abhängigkeit der Flughöhe des Flugzeugs (nördliche Hemisphäre, 45˚N, Juli)

| Siedetemperatur, [˚C] | Siededruck, [bar] | Flughöhe, [m] |
|---|---|---|
| 59 | 0,1901 | 12497 (41000 Fuß) |
| 60 | 0,1992 | 12192 (40000 Fuß) |
| 70 | 0,3116 | 9144 (30000 Fuß) |
| 80 | 0,4736 | 6096 (20000 Fuß) |
| 90 | 0,7011 | 3048 (10000 Fuß) |
| 100 | 1,0132 | 0 |
| 120,23 | 2 | - |

Aus Tabelle 1 geht hervor, dass die Brennstoffzelle 14 bei einer Betriebstemperatur von ca. 60˚C betrieben werden kann, wenn sich das Flugzeug in Reiseflughöhe befindet. Im Steigflug und im Sinkflug des Flugzeugs wird die Betriebstemperatur der Brennstoffzelle 14 von der Steuereinheit 24 kontinuierlich an den sich verändernden Umgebungsdruck angepasst. Mit anderen Worten, die Betriebstemperatur der Brennstoffzelle 14 wird der druckabhängigen Verdampfungskurve des Kühlmediums Wasser derart nachgeführt, dass die Verdampfung des Kühlmediums Wasser in den Kühlkanälen 17 des Verdampfungskühlsystems 16 auch im Steigflug sowie im Sinkflug des Flugzeugs im Nassdampfgebiet erfolgt. Dadurch wird stets eine ordnungsgemäße Verdampfung des die Kühlkanäle 17 des Verdampfungskühlsystems 16 durchströmenden Kühlmediums gewährleistet. Gleichzeitig wird ein Betrieb der Brennstoffzelle 14 bei unnötig hohen Betriebstemperaturen vermieden.

Tabelle 1 zeigt, dass die Brennstoffzelle 14 über einen großen Teil ihrer Betriebszeit im optimalen Betriebstemperaturbereich von 60 bis 90˚C betrieben werden kann. Höhere Betriebstemperaturen der Brennstoffzelle 14 sind nur dann erforderlich, wenn sich das Flugzeug im Flugbetrieb auf einer Höhe von unter 3048 m (10000 Fuß) oder am Boden befindet.

Um im Betrieb der Brennstoffzelle 14 eine unerwünschte Verdampfung von in der Brennstoffzelle 14, d.h. beispielsweise in einem Anodenbereich, einem Kathodenbereich, im Bereich einer den Anodenbereich vom Kathodenbereich trennenden Membran, in Anodengasleitungen oder Kathodengasleitungen üblicherweise in flüssiger Form vorhandenem Wasser zu verhindern, steuert die Steuereinheit 24 ein in ein Medienversorgungssystem der Brennstoffzelle 14 integriertes Brennstoffzellenbetriebsdruckerzeugungssystem 25 in der Weise, dass in der Brennstoffzelle 14 ein Betriebsdruck erzeugt wird, bei dem ein unerwünschtes Verdampfen des in der Brennstoffzelle vorhandenen flüssigen Wassers unterbunden wird. Die in Fig. 1 gezeigte Niedrigtemperatur-PEM-Brennstoffzelle 14 wird mit einem Betriebsdruck von 2 bar betrieben. Bei einem Druck von 2 bar liegt die Verdampfungstemperatur von Wasser bei 120,23˚C, so dass ein Verdampfen des in der Brennstoffzelle 14 vorhandenen flüssigen Wassers im gesamten Betriebstemperaturbereich der Brennstoffzelle 14 sicher vermieden wird.

Das in Figur 1 gezeigte Brennstoffzellensystem 10 umfasst ferner einen in Form eines Außenhautkühlers ausgebildeten Kondensator 26. Der Kondensator 26 dient dazu, das im Betrieb der Brennstoffzelle 14 zur Kühlung der Brennstoffzelle 14 verdampfte Wasser in den flüssigen Aggregatzustand zurückzuführen. Der Kondensator 26 wird durch die aus einer Titanlegierung, einer Aluminiumlegierung, einem Faser-Kunststoff-Verbundmaterial oder glasfaserverstärktem Aluminium bestehende Flugzeugaußenhaut im Bereich des Belly-Fairing 12 gebildet. Das beim Durchströmen der Kühlkanäle 17 des Verdampfungskühlsystems 16 verdampfte Wasser tritt durch eine Dampfauslassleitung 28 aus den Kühlkanälen aus, verteilt sich im Inneren des Belly-Fairing 12 und wandert zu einer Innenseite der Flugzeugaußenhaut, ohne dass hierzu Rohrleitungen erforderlich wären. Der Wasserdampf kondensiert an der Innenseite der Flugzeugaußenhaut und gibt die dabei frei werdende Kondensationswärme über die Außenseite der Flugzeugaußenhaut an die Umgebung ab.

Wenn die Brennstoffzelle 14 beispielsweise 1 MW elektrische Leistung erzeugt, muss im Betrieb der Brennstoffzelle 14 0,5 Liter Wasser pro Sekunde verdampft werden, um für eine ordnungsgemäße Abfuhr der Reaktionswärme von der Brennstoffzelle 14 zu sorgen. Der Wasserdampf wandert durch die Dampfauslassleitung 28 durch den Innenraum des Belly-Fairing 12 zur Innenseite der Flugzeugaußenhaut und kondensiert dort. Im Betrieb der Brennstoffzelle 14 laufen somit ca. 0,5 Liter kondensiertes Wasser pro Sekunde an den Innenseiten der Flugzeugaußenhaut herunter.

Das an den Innenseiten der Flugzeugaußenhaut herunterlaufende kondensierte Wasser wird in einem Kondensatsammelgebiet 30 gesammelt. Das Kondensatsammelgebiet 30 befindet sich in einem bodennahen Bereich des den Kondensator 26 bildenden Flugzeugaußenhautabschnitts, so dass die Schwerkraft genutzt werden kann, um das kondensierte Wasser zu sammeln. Von dem Kondensatsammelgebiet 30 wird das kondensierte Wasser mit Hilfe der Pumpe 18 entweder in den Kühlmediumtank 20 gefördert oder direkt in die in den Bipolarplatten der Brennstoffzelle 14 ausgebildeten Kühlkanäle 17 zurückgeführt. Dadurch entsteht ein geschlossener Kühlmediumkreislauf.

Die im Inneren des Belly-Fairing 12 angeordneten Komponenten müssen selbstverständlich gegen Feuchtigkeit geschützt werden. Da dem Innenraum des Belly-Fairing 12 jedoch über die Dampfauslassleitung 28 im Betrieb der Brennstoffzelle 14 kontinuierlich Wasserdampf mit einer Temperatur von mindestens ca. 60˚C zugeführt wird, kann auf einen Schutz der im Inneren des Belly-Fairing 12 angeordneten Komponenten gegen Eis und Kälte während des Flugs verzichtet werden. Das Belly-Fairing 12 kann als das Brennstoffzellensystem 10 beherbergendes Compartment ausgebildet sein. Der von dem Verdampfungskühlsystem 16 erzeugte Wasserdampf kann für die Ventilation und/oder Inertisierung dieses Compartments genutzt werden.

Um auch dann einen zuverlässigen Betrieb des Brennstoffzellensystems 10 zu gewährleisten, wenn beispielsweise aufgrund hoher Umgebungstemperaturen oder bei Windstille eine ordnungsgemäße Abfuhr der in dem Kühlmedium Wasser gespeicherten Brennstoffzellenreaktionswärme über den Kondensator 26 erschwert ist, umfasst das Brennstoffzellensystem 10 ferner eine in Form zweier Dampfablassventile 32, 34 ausgebildete Vorrichtung zur Abfuhr des Kühlmediums Wasser an die Umgebung. Die Ansteuerung der Dampfablassventile 32, 34 erfolgt mittels der elektronischen Steuereinheit 24. Zu diesem Zweck empfängt die Steuereinheit 24 Signale von dem Drucksensor 22 und/oder einem Temperatursensor 36 zur Messung der Temperatur im Inneren des Belly-Fairing 12. Wenn der Drucksensor 22 und/oder der Temperatursensor 36 anzeigt/anzeigen, dass der Druck und/oder die Temperatur im Belly-Fairing 12 einen vorbestimmten kritischen Maximalwert/vorbestimmte kritische Maximalwerte überschreitet/überschreiten, werden die Dampfablassventile 32, 34 von der elektronischen Steuereinheit 24 geöffnet, so dass über die Dampfauslassleitung 28 in den Innenraum des Belly-Fairing 12 zugeführter Wasserdampf und damit auch die in dem Wasserdampf gespeicherte thermische Energie aus dem Innenraum des Belly-Fairing 12 in die Umgebung abgeführt werden kann.

Um auch bei einem Ausfall des Kondensators 26 oder im Anschluss an eine Kühlmediumabfuhr an die Umgebung eine ordnungsgemäße Funktion des Verdampfungskühlsystems 16 gewährleisten zu können, muss für eine von der Kondensation des beim Durchströmen der Kühlkanäle 17 verdampften Kühlmediums unabhängige Kühlmediumzufuhr in das Verdampfungskühlsystem 16, d.h. den Kühlmitteltank 20 oder die Kühlkanäle 17 gesorgt werden. Zu diesem Zweck weist das Brennstoffzellensystem 10 eine Prozesswasserentnahmevorrichtung 35 auf, die dazu dient, von der Brennstoffzelle 14 im Betrieb erzeugtes Wasser aufzunehmen und dem Kühlmitteltank 20 des Verdampfungskühlsystems 16 zuzuführen.

Schließlich umfasst das Brennstoffzellensystem 10 ein Speichersystem 37 zur Speicherung von im Betrieb der Brennstoffzelle 14 erzeugter elektrischer Energie. Das Speichersystem 37 dient dazu, von der Brennstoffzelle 14 erzeugte überschüssige Energie zwischenzuspeichern und bei Bedarf an von dem Brennstoffzellensystem 10 mit elektrischer Energie versorgte Verbraucher an Bord des Flugzeugs abzugeben. Das Speichersystem 37 kann beispielsweise einen Superkondensator oder mehrere Superkondensatoren umfassen.

Grundsätzlich kann das Belly-Fairing 12 auch als Druckbehälter ausgebildet sein. In diesem Fall kann der Druck $p_1$ im Inneren des Belly-Fairing 12 auch über dem Umgebungsdruck $p_A$ liegen. Da der Kühlmediumdampf kompressibel ist, kann der Innenraum des Belly-Fairing 12 dann auch als Speicherbehälter zum Abfangen von Lastschwankungen dienen. Darüber hinaus kann bei einer gezielten Variation des Drucks $p_1$ im Inneren des Belly-Fairing 12 durch eine entsprechende Steuerung der Pumpe 18, des Wärmeeintrags durch die Brennstoffzelle 14 und der Dampfablassventile 32, 34 die Intensität des Wärmeübergangs an einer Innenseite der Belly-Fairing-Wand beeinflusst werden, da der Wärmeübergang druckabhängig ist. Eine Ausführung des Belly-Fairing 12 als Druckbehälter erfordert jedoch eine entsprechende Verstärkung der Belly-Fairing-Wand und führt daher zu einer unerwünschten Gewichtserhöhung.

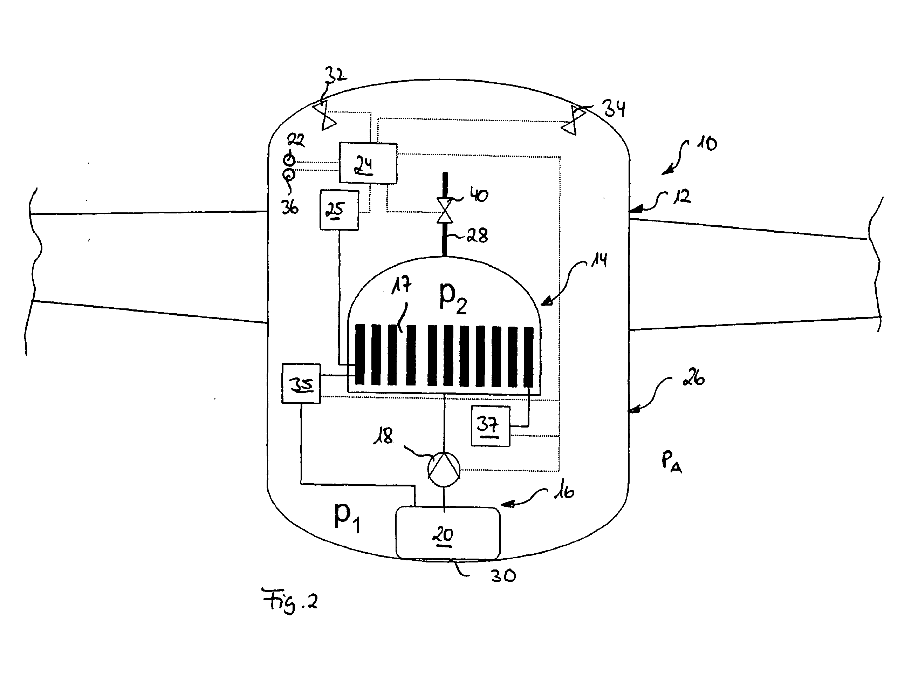

Das in Figur 2 gezeigte Brennstoffzellensystem 10 unterscheidet sich von dem Brennstoffzellensystem gemäß Figur 1 dadurch, dass die Brennstoffzelle 14 nicht als Niedrigtemperatur-PEM-Brennstoffzelle, sondern als Hochtemperatur-PEM-Brennstoffzelle ausgebildet ist. Die Hochtemperatur-PEM-Brennstoffzelle 14 gemäß Fig. 2 wird normalerweise bei höheren Betriebstemperaturen (bis zu 200˚C) betrieben als die in Fig. 1 gezeigte Niedrigtemperatur-PEM-Brennstoffzelle 14.

Darüber hinaus ist in der mit den Kühlkanälen 17 des Verdampfungskühlsystems 16 verbundenen Dampfauslassleitung 28 ein Ventil 40 angeordnet, das in seiner Schließstellung einen die Kühlkanäle 17 des Verdampfungskühlsystems 16 umfassenden Druckraum begrenzt. Dieser Druckraum kann so ausgelegt sein, dass er einem Überdruck von mehreren bar standhält. Mit Hilfe der Pumpe 18 kann somit in dem die Kühlkanäle 17 des Verdampfungskühlsystems 16 umfassenden Druckraum ein gegenüber dem Druck $p_1$ im Belly-Fairing 12 erhöhter Druck $p_2$ erzeugt werden. Zur Messung des Drucks in diesem Druckraum kann ein in Fig. 2 nicht gezeigter Drucksensor vorgesehen sein.

In dem in Figur 2 gezeigten Brennstoffzellensystem 10 kann es bei einem einem geringen Umgebungsdruck $p_A$ entsprechenden Druck in den Kühlkanälen 17 des Verdampfungskühlsystems 16 aufgrund der großen Differenz zwischen der relativ geringen Verdampfungstemperatur des Kühlmediums bei geringem Druck und der relativ hohen Betriebstemperatur der Hochtemperatur-PEM-Brennstoffzelle 14 in den Kühlkanälen 17 des Verdampfungskühlsystems 16 zu einer Siedekrise und damit zu einer Materialüberhitzung und Materialschädigung in den Kühlkanälen 17 des Verdampfungskühlsystems 16 kommen. Um dies zu verhindern, wird der Druck in den Kühlkanälen 17 des Verdampfungskühlsystems 16 mit Hilfe der Pumpe 18 gezielt erhöht, um die Verdampfungstemperatur des Kühlmediums so anzuheben, dass bei der Betriebstemperatur der Hochtemperatur-PEM-Brennstoffzelle 14 ein optimales Siedeverhalten des Kühlmediums bewirkt wird.

Die Steuereinheit 24 kann die Betriebstemperatur der Brennstoffzelle 14 in Abhängigkeit des Drucks in den Kühlkanälen 17 des Verdampfungskühlsystems 16 so steuern, dass die Verdampfung des die Kühlkanäle durchströmenden Wassers durch die von der Brennstoffzelle 14 im Betrieb erzeugte Reaktionswärme im Nassdampfgebiet erfolgt. Alternativ dazu kann die Steuereinheit 24 jedoch auch die Betriebstemperatur der Brennstoffzelle 14 als Steuergröße heranziehen und den Druck in den Kühlkanälen 17 des Verdampfungskühlsystems 16 in Abhängigkeit der Betriebstemperatur der Brennstoffzelle 14 so steuern, dass die Verdampfung des die Kühlkanäle durchströmenden Wassers durch die von der Brennstoffzelle 14 im Betrieb erzeugte Reaktionswärme im Nassdampfgebiet erfolgt. Der Betrieb des in Fig. 2 gezeigten Brennstoffzellensystems 10 kann somit unabhängig von dem Umgebungsdruck $p_A$ und damit unabhängig von der Flughöhe des Flugzeugs erfolgen. Darüber hinaus ermöglicht eine Variation des Drucks in den Kühlkanälen 17 des Verdampfungskühlsystems 16 eine Steuerung des Wärmeübergangs in den Kühlkanälen 17. Das Zusammenspiel zwischen der Pumpe 18, der von der Brennstoffzelle 14 im Betrieb erzeugten Reaktionswärme, dem Ventil 40 und den Dampfablassventilen 32, 34 wird von der Steuereinheit 24 in Abhängigkeit von witterungsbedingten und operationellen Einflussgrößen, wie Flughöhe, Lastanforderung von einem elektrischen Bordnetz, dem Ladezustand des Speichersystems 37, etc. gesteuert. Im Übrigen entsprechen der Aufbau und die Funktionsweise des in Figur 2 dargestellten Brennstoffzellensystems 10 dem Aufbau und der Funktionsweise der Anordnung gemäß Figur 1.

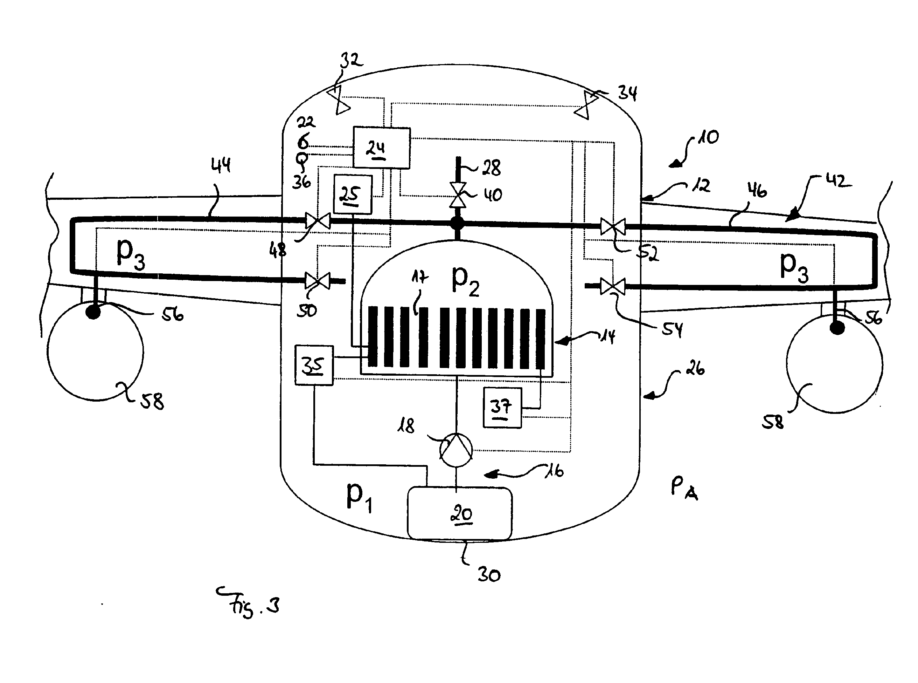

Das in Figur 3 veranschaulichte Brennstoffzellensystem 10 unterscheidet sich von der in Figur 2 gezeigten Anordnung dadurch, dass das Brennstoffzellensystem 10 nicht nur einen Kondensator 26 zur Abfuhr der Brennstoffzellenreaktionswärme an die Umgebung, sondern auch eine in Form einer Enteisungsanlage ausgebildete Einrichtung 42 zur Nutzung der in dem Kühlmedium Wasser gespeicherten Wärme umfasst. Die Enteisungsanlage umfasst zwei von der Dampfauslassleitung 28 abzweigende Dampfleitungen 44, 46, durch die aus den Kühlkanälen 17 des Verdampfungskühlsystems 16 austretender Wasserdampf abgeleitet und in zu enteisende Bereiche des Flugzeugs gefördert werden kann.

Beim Durchströmen der Dampfleitungen 44, 46 gibt der Wasserdampf die in ihm gespeicherte Wärmeenergie an die zu enteisenden Bereiche des Flugzeugs ab und wird anschließend entweder in immer noch gasförmiger oder flüssiger Form in den Innenraum des Belly-Fairing 12 zurückgeführt. Zur Steuerung eines gewünschten Drucks in den Dampfleitungen 44, 46 sind in den Dampfleitungen 44, 46 Drucksteuerungsventile 48, 50, 52, 54 angeordnet. Die Drucksteuerungsventile 48, 50, 52, 54 werden in Abhängigkeit des gewünschten Drucks $p_2$ in den Kühlkanälen 17 des Verdampfungskühlsystems 16 und eines gewünschten Drucks $p_3$ in den Dampfleitungen 44, 46 gesteuert. Der Druck $p_3$ in den Dampfleitungen 44, 46 kann jedoch den Druck $p_2$ in den Kühlkanälen 17 des Verdampfungskühlsystems 16 nicht übersteigen. Eine Variation des Drucks in den Dampfleitungen 44, 46 ermöglicht eine Steuerung des Wärmeübergangs in den Dampfleitungen 44, 46. Das Zusammenspiel zwischen der Pumpe 18, der von der Brennstoffzelle 14 im Betrieb erzeugten Reaktionswärme, dem Ventil 40, den Drucksteuerungsventilen 48, 50, 52, 54 und den Dampfablassventilen 32, 34 wird von der Steuereinheit 24 in Abhängigkeit von witterungsbedingten und operationellen Einflussgrößen, wie Flughöhe, Lastanforderung von einem elektrischen Bordnetz, dem Ladezustand des Speichersystems 37, etc. und bei Bedarf unter Vorgabe einer vorrangigen Tragwerksenteisung gesteuert.

Darüber hinaus umfasst das in Figur 3 veranschaulichte Brennstoffzellensystem 10 zwei Zuführanlagen 56 zur Zuführung von Wasserdampf in einen Abgasstrahl zweier Flugzeugtriebwerke 58. Der Wasserdampf kann beispielsweise durch Venturidüsen in den Abgasstrahl der Flugzeugtriebwerke 58 eingesogen werden. Durch die Zuführung von Wasserdampf in den Abgasstrahl der Flugzeugtriebwerke 58 kann der Schadstoffausstoß der Triebwerke 58 gemindert werden. Im Übrigen entsprechen der Aufbau und die Funktionsweise des in Figur 3 dargestellten Brennstoffzellensystems 10 dem Aufbau und der Funktionsweise der Anordnung gemäß Figur 2.

**Patentansprüche**

**1.** Brennstoffzellensystem (10) mit:

- einer Brennstoffzelle (14) und
- einem Verdampfungskühlsystem (16), das in Wärmekontakt mit der Brennstoffzelle (14) steht, um im Betrieb der Brennstoffzelle (14) von der Brennstoffzelle (14) erzeugte Wärme durch Verdampfen eines Kühlmediums aufzunehmen und von der Brennstoffzelle (14) abzuführen,

**gekennzeichnet durch** eine Einrichtung (22) zur Erfassung des Drucks in dem Verdampfungskühlsystem (16) sowie eine Steuereinheit (24), die dazu eingerichtet ist, die Betriebstemperatur der Brennstoffzelle (14) in Abhängigkeit von Signalen, die der Steuereinheit (24) von der Einrichtung (22) zur Erfassung des Drucks in dem Verdampfungskühlsystem (16) zugeführt werden, derart zu steuern, dass das Kühlmedium des Verdampfungskühlsystems (16) **durch** die im Betrieb der Brennstoffzelle (14) von der Brennstoffzelle (14) erzeugte Wärme vom flüssigen in den gasförmigen Aggregatzustand überführt wird.

2. Brennstoffzellensystem nach Anspruch 1,
**dadurch gekennzeichnet, dass** die Steuereinheit (24) dazu eingerichtet ist, die Betriebstemperatur der Brennstoffzelle (14) in Abhängigkeit der Signale, die der Steuereinheit (24) von der Einrichtung (22) zur Erfassung des Drucks in dem Verdampfungskühlsystem (16) zugeführt werden, derart zu steuern, dass die Verdampfung des Kühlmediums des Verdampfungskühlsystems (16) durch die im Betrieb der Brennstoffzelle (14) von der Brennstoffzelle (14) erzeugte Wärme im Nassdampfgebiet des Kühlmediums erfolgt.

3. Brennstoffzellensystem nach Anspruch 1 oder 2,
**gekennzeichnet durch** ein Brennstoffzellenbetriebsdruckerzeugungssystem (25), das dazu eingerichtet ist, in der Brennstoffzelle (14) einen gewünschten Druck zu erzeugen und eine Steuereinheit (24) zur Steuerung des Brennstoffzellenbetriebsdruckerzeugungssystems (25), wobei die Steuereinheit (24) zur Steuerung des Brennstoffzellenbetriebsdruckerzeugungssystems (25) insbesondere dazu eingerichtet ist, das Brennstoffzellenbetriebsdruckerzeugungssystem (25) so zu steuern, dass in der Brennstoffzelle (14) ein Druck erzeugt wird, bei dem ein unerwünschtes Verdampfen von in der Brennstoffzelle (14) üblicherweise in flüssiger Form vorliegenden Stoffen und/oder Stoffgemischen verhindert wird und/oder den Druck in der Brennstoffzelle (14) in Abhängigkeit der Betriebstemperatur der Brennstoffzelle (14) und/oder in Abhängigkeit der Signale der Einrichtung (22) zur Erfassung des Drucks in dem Verdampfungskühlsystem (16) zu steuern.

4. Brennstoffzellensystem nach einem der vorhergehenden Ansprüche,
**dadurch gekennzeichnet, dass** das Verdampfungskühlsystem (16) einen Kondensator (26) zur Kondensation des im Betrieb der Brennstoffzelle (14) zur Kühlung der Brennstoffzelle (14) verdampften Kühlmediums umfasst, wobei der Kondensator (26) insbesondere in Form eines Außenhautkühlers ausgebildet ist.

5. Brennstoffzellensystem nach einem der vorhergehenden Ansprüche,
**gekennzeichnet durch** mindestens eine Einrichtung (42) zur Nutzung von in dem Kühlmedium gespeicherter Wärme, wobei die Einrichtung (42) zur Nutzung der in dem Kühlmedium gespeicherten Wärme insbesondere eine Dampfheizung, eine Wasserentsalzungsanlage oder eine Enteisungsanlage eines Flugzeugs ist.

6. Brennstoffzellensystem nach einem der vorhergehenden Ansprüche,
**gekennzeichnet durch** eine Vorrichtung (32, 34) zur Abfuhr des Kühlmedium an die Umgebung.

7. Verfahren zum Betreiben eines Brennstoffzellensystems (10) mit einer Brennstoffzelle (14) und einem Verdampfungskühlsystem (16), das in Wärmekontakt mit der Brennstoffzelle (14) steht, um im Betrieb der Brennstoffzelle (14) von der Brennstoffzelle (14) erzeugte Wärme durch Verdampfen eines Kühlmediums aufzunehmen und von der Brennstoffzelle (14) abzuführen,
**gekennzeichnet durch** die Schritte:

- Erfassen des Drucks in dem Verdampfungskühlsystem (16) mittels einer Druckerfassungseinrichtung (22) und
- Steuern der Betriebstemperatur der Brennstoffzelle (14) mittels einer Steuereinheit (24) in Abhängigkeit von Signalen, die der Steuereinheit (24) von der Druckerfassungseinrichtung (22) zugeführt werden, in der Weise, dass das Kühlmedium des Verdampfungskühlsystems (16) **durch** die im Betrieb der Brennstoffzelle (14) von der Brennstoffzelle (14) erzeugte Wärme vom flüssigen in den gasförmigen Aggregatzustand überführt wird.

8. Verfahren nach Anspruch 7,
**dadurch gekennzeichnet, dass** die Betriebstemperatur der Brennstoffzelle (14) in Abhängigkeit der Signale, die der Steuereinheit (24) von der Druckerfassungseinrichtung (22) zugeführt werden, in der Weise gesteuert wird, dass die Verdampfung des Kühlmediums des Verdampfungskühlsystems (16) durch die im Betrieb der Brennstoffzelle (14) von der Brennstoffzelle (14) erzeugte Wärme im Nassdampfgebiet des Kühlmediums erfolgt.

9. Verfahren nach Anspruch 7 oder 8,
**dadurch gekennzeichnet, dass** mittels eines Brennstoffzellenbetriebsdruckerzeugungssystems (25) in der Brennstoffzelle (14) ein gewünschter Druck erzeugt wird, wobei das Brennstoffzellenbetriebsdruckerzeugungssystem (25) mittels einer Steuereinheit (24) zur Steuerung des Brennstoffzellenbetriebsdruckerzeugungssystems (25) insbesondere so gesteuert wird, dass in der Brennstoffzelle (14) ein Druck erzeugt wird, bei dem ein unerwünschtes Verdampfen von in der Brennstoffzelle (14) üblicherweise in flüssiger Form vorliegenden Stoffen und/oder Stoffgemischen verhindert wird.

10. Verfahren nach einem der Ansprüche 7 bis 9,
**dadurch gekennzeichnet, dass** die Steuereinheit (24) zur Steuerung des Brennstoffzellenbetriebsdruckerzeugungssystems (25) den Druck in der Brennstoffzelle (14) in Abhängigkeit der Betriebstemperatur der Brennstoffzelle (14) und/oder in Abhängigkeit der Signale der Druckerfassungseinrichtung (22) steuert.

11. Verfahren nach einem der Ansprüche 7 bis 10,
**dadurch gekennzeichnet, dass** das im Betrieb der Brennstoffzelle (14) zur Kühlung der Brennstoffzelle (14) verdampfte Kühlmedium in einem insbesondere in Form eines Außenhautkühlers ausgebildeten Kondensator (26) kondensiert wird.

12. Verfahren nach einem der Ansprüche 7 bis 11,
**dadurch gekennzeichnet, dass** in dem Kühlmedium gespeicherte Wärme mindestens einer Einrichtung (42) zur Nutzung dieser Wärme zugeführt wird, die insbesondere in Form einer Dampfheizung, einer Wasserentsalzungsanlage oder einer Enteisungsanlage eines Flugzeugs ausgebildet ist.

13. Verfahren nach einem der Ansprüche 7 bis 12,
**dadurch gekennzeichnet, dass** das Kühlmedium an die Umgebung abgeführt wird.

14. Luftfahrzeug mit einem Brennstoffzellensystem (10) nach einem der Ansprüche 1 bis 6.

15. Luftfahrzeug nach Anspruch 14,
**dadurch gekennzeichnet, dass** das Brennstoffzellensystem (10) in einem unbedruckten Bereich des Luftfahrzeugs angeordnet ist.

## Claims

1. Fuel cell system (10) comprising:

   - a fuel cell (14) and
   - an evaporative cooling system (16), which is in thermal contact with the fuel cell (14), in order that heat generated by the fuel cell (14) during operation of the fuel cell (14) is absorbed through evaporation of a cooling medium and is removed from the fuel cell (14),

   **characterized by** a device (22) for sensing the pressure in the evaporative cooling system (16), and by a control unit (24), which is adapted to control the operating temperature of the fuel cell (14) in dependence on signals that are supplied to the control unit (24) from the device (22) for sensing the pressure in the evaporative cooling system (16), in such a way that the cooling medium of the evaporative cooling system (16) is transferred from the liquid to the gaseous state of matter by the heat generated by the fuel cell (14) during operation of the fuel cell (14).

2. Fuel cell system according to Claim 1,
**characterized in that** the control unit (24) is set up to control the operating temperature of the fuel cell (14) in dependence on the signals that are supplied to the control unit (24) from the device (22) for sensing the pressure in the evaporative cooling system (16), in such a way that the evaporation of the cooling medium of the evaporative cooling system (16) by the heat generated by the fuel cell (14) during operation of the fuel cell (14) is effected in the wet-steam region of the cooling medium.

3. Fuel cell system according to Claim 1 or 2,
**characterized by** a fuel-cell operating-pressure generating system (25), which is adapted to generate a desired pressure in the fuel cell (14), and by a control unit (24) for controlling the fuel-cell operating-pressure generating system (25), wherein the control unit (24) for controlling the fuel-cell operating-pressure generating system (25), in particular is adapted to control the fuel-cell operating-pressure generating system (25) such that there is generated in the fuel cell (14) a pressure at which unwanted evaporation of substances and/or substance mixtures usually present in liquid form in the fuel cell (14) is prevented, and/or to control the pressure in the fuel cell (14) in dependence on the operating temperature of the fuel cell (14) and/or in dependence on the signals of the device (22) for sensing the pressure in the evaporative cooling system (16).

4. Fuel cell system according to any one of the preceding claims,
**characterized in that** the evaporative cooling system (16) comprises a condenser (26), for condensing the cooling medium evaporated during operation of the fuel cell (14) for the purpose of cooling the fuel cell (14), wherein the condenser (26), in particular is realized in the form of an outer-skin cooler.

5. Fuel cell system according to any one of the preceding claims,
**characterized by** at least one device (42) for utilizing heat stored in the cooling medium, wherein the device (42) for utilizing the heat stored in the cooling medium in particular is a steam heating means, a water desalination installation or a de-icing installation of an aircraft.

6. Fuel cell system according to any one of the preceding claims,
**characterized by** an apparatus (32, 34) for removing the cooling medium to the environment.

7. Method for operating a fuel cell system (10) comprising a fuel cell (14) and an evaporative cooling system (16), which is in thermal contact with the fuel cell (14), in order that heat generated by the fuel cell (14) during operation of the fuel cell (14) is absorbed through evaporation of a cooling medium and is removed from the fuel cell (14),
**characterized by** the steps:

- sensing the pressure in the evaporative cooling system (16) by means of a pressure sensing device (22) and
- controlling the operating temperature of the fuel cell (14) by means of a control unit (24) in dependence on signals that are supplied to the control unit (24) from the pressure sensing device (22), in such a manner that the cooling medium of the evaporative cooling system (16) is transferred from the liquid to the gaseous state of matter by the heat generated by the fuel cell (14) during operation of the fuel cell (14).

8. Method according to Claim 7,
**characterized in that** the operating temperature of the fuel cell (14) is controlled, in dependence on the signals that are supplied to the control unit (24) from the pressure sensing device (22), in such a manner that the evaporation of the cooling medium of the evaporative cooling system (16) by the heat generated by the fuel cell (14) during operation of the fuel cell (14) is effected in the wet-steam region of the cooling medium.

9. Method according to Claim 7 or 8,
**characterized in that** a desired pressure is generated in the fuel cell (14) by means of a fuel-cell operating-pressure generating system (25), wherein the fuel-cell operating-pressure generating system (25), by means of a control unit (24) for controlling the fuel-cell operating-pressure generating system (25), in particular is controlled such that there is generated in the fuel cell (14) a pressure at which unwanted evaporation of substances and/or substance mixtures usually present in liquid form in the fuel cell (14) is prevented.

10. Method according to any one of Claims 7 to 9,
**characterized in that** the control unit (24) for controlling the fuel-cell operating-pressure generating system (25) controls the pressure in the fuel cell (14) in dependence on the operating temperature of the fuel cell (14) and/or in dependence on the signals of the pressure sensing device (22).

11. Method according to any one of Claims 7 to 10,
**characterized in that** the cooling medium evaporated during operation of the fuel cell (14) for the purpose of cooling the fuel cell (14) is condensed in a condenser (26), which in particular is formed as an outer-skin cooler.

12. Method according to any one of Claims 7 to 11,
**characterized in that** heat stored in the cooling medium is supplied to at least one device (42) for the utilization of this heat, which in particular is realized in the form of a steam heating means, a water desalination installation or a de-icing installation of an aircraft.

13. Method according to any one of Claims 1 to 12,
**characterized in that** the cooling medium is removed to the environment.

**EP 2 225 789 B1**

**14.** Aircraft comprising a fuel cell system (10) according to any one of Claims 1 to 6.

**15.** Aircraft according to Claim 14,
**characterized in that** the fuel cell system (10) is arranged in a non-pressurized region of the aircraft.

## Revendications

**1.** Système de pile à combustible (10) comprenant:

- une pile à combustible (14) et
- un système de refroidissement par évaporation (16) qui est en contact de transmission de chaleur avec la pile à combustible (14), pour absorber, par évaporation d'un agent réfrigérant, et évacuer de la pile à combustible (14), de la chaleur produite par la pile à combustible (14) lors du fonctionnement de la pile à combustible (14),

**caractérisé par** un dispositif (22) pour détecter la pression dans le système de refroidissement par évaporation (16), ainsi que par une unité de commande (24) qui est conçue pour commander la température de fonctionnement de la pile à combustible (14) en fonction de signaux transmis à l'unité de commande (24) par le dispositif (22) destiné à détecter la pression dans le système de refroidissement par évaporation (16), de façon telle que l'agent réfrigérant du système de refroidissement par évaporation (16) soit transféré de l'état physique liquide à l'état physique gazeux par la chaleur produite par la pile à combustible (14) lors du fonctionnement de la pile à combustible (14).

**2.** Système de pile à combustible selon la revendication 1,
**caractérisé en ce que** l'unité de commande (24) est conçue pour commander la température de fonctionnement de la pile à combustible (14) en fonction des signaux transmis à l'unité de commande (24) par le dispositif (22) destiné à détecter la pression dans le système de refroidissement par évaporation (16), de façon telle que l'évaporation de l'agent réfrigérant du système de refroidissement par évaporation (16), par la chaleur produite par la pile à combustible (14) lors du fonctionnement de la pile à combustible (14), s'effectue dans le domaine de la vapeur humide de l'agent réfrigérant.

**3.** Système de pile à combustible selon la revendication 1 ou la revendication 2,
**caractérisé par** un système de production de pression de fonctionnement de pile à combustible (25), qui est conçu pour produire une pression souhaitée dans la pile à combustible (14), et par une unité de commande (24) pour commander le système de production de pression de fonctionnement de pile à combustible (25), l'unité de commande (24) destinée à commander le système de production de pression de fonctionnement de pile à combustible (25) étant notamment conçue pour commander le système de production de pression de fonctionnement de pile à combustible (25) de façon telle que dans la pile à combustible (14) soit produite une pression pour laquelle on empêche une évaporation non souhaitée de substances et/ou de mélanges de substances présents usuellement sous forme liquide dans la pile à combustible (14), et /ou pour commander la pression dans la pile à combustible (14) en fonction de la température de fonctionnement de la pile à combustible (14) et/ou en fonction des signaux du dispositif (22) pour détecter la pression dans le système de refroidissement par évaporation (16).

**4.** Système de pile à combustible selon l'une des revendications précédentes,
**caractérisé en ce que** le système de refroidissement par évaporation (16) comprend un condenseur (26) destiné à condenser l'agent réfrigérant évaporé pour le refroidissement de la pile à combustible (14) lors du fonctionnement de la pile à combustible (14), le condenseur (26) étant en particulier réalisé sous la forme d'un radiateur à enveloppe d'échange extérieure.

**5.** Système de pile à combustible selon l'une des revendications précédentes,
**caractérisé par** au moins un dispositif (42) pour récupérer la chaleur accumulée dans l'agent réfrigérant, le dispositif (42) pour récupérer la chaleur accumulée dans l'agent réfrigérant étant notamment un chauffage à vapeur, une installation de dessalement d'eau ou une installation de dégivrage d'un avion.

**6.** Système de pile à combustible selon l'une des revendications précédentes,
**caractérisé par** un dispositif (32, 34) pour évacuer l'agent réfrigérant dans l'environnement.

**7.** Procédé pour faire fonctionner un système de pile à combustible (10) comprenant une pile à combustible (14) et un système de refroidissement par évaporation (16) qui est en contact de transmission de chaleur avec la pile à combustible (14) pour absorber, par évaporation d'un agent réfrigérant, et évacuer de la pile à combustible (14), de la chaleur produite par la pile à combustible (14) lors du fonctionnement de la pile à combustible (14), **caractérisé par** les étapes suivantes:

- détection de la pression dans le système de refroidissement par évaporation (16) au moyen d'un dispositif de détection de pression (22), et
- commande de la température de fonctionnement de la pile à combustible (14) au moyen d'une unité de commande (24), en fonction de signaux transmis à l'unité de commande (24) par le dispositif de détection de pression (22), de façon telle que l'agent réfrigérant du système de refroidissement par évaporation (16) soit transféré de l'état physique liquide à l'état physique gazeux par la chaleur produite par la pile à combustible (14) lors du fonctionnement de la pile à combustible (14).

**8.** Procédé selon la revendication 7,
**caractérisé en ce que** la température de fonctionnement de la pile à combustible (14) est commandée, en fonction des signaux transmis à l'unité de commande (24) par le dispositif de détection de pression (22), de façon telle que l'évaporation de l'agent réfrigérant du système de refroidissement par évaporation (16) par la chaleur produite par la pile à combustible (14) lors du fonctionnement de la pile à combustible (14), s'effectue dans le domaine de la vapeur humide de l'agent réfrigérant.

**9.** Procédé selon la revendication 7 ou la revendication 8,
**caractérisé en ce qu'**une pression souhaitée est produite dans la pile à combustible (14) au moyen d'un système de production de pression de fonctionnement de pile à combustible (25), le système de production de pression de fonctionnement de pile à combustible (25) étant commandé moyennant une unité de commande (24) destinée à la commande du système de production de pression de fonctionnement de pile à combustible (25), notamment de façon telle que dans la pile à combustible (14) soit produite une pression pour laquelle on empêche une évaporation non souhaitée de substances et/ou de mélanges de substances présents usuellement sous forme liquide dans la pile à combustible (14).

**10.** Procédé selon l'une des revendications 7 à 9,
**caractérisé en ce que** l'unité de commande (24) destinée à la commande du système de production de pression de fonctionnement de pile à combustible (25), commande la pression dans la pile à combustible (14) en fonction de la température de fonctionnement de la pile à combustible (14) et/ou en fonction des signaux du dispositif de détection de pression (22).

**11.** Procédé selon l'une des revendications 7 à 10,
**caractérisé en ce que** l'agent réfrigérant évaporé pour le refroidissement de la pile à combustible (14) lors du fonctionnement de la pile à combustible (14) est condensé dans un condenseur (26) notamment réalisé sous la forme d'un radiateur à enveloppe d'échange extérieure.

**12.** Procédé selon l'une des revendications 7 à 11,
**caractérisé en ce que** la chaleur accumulée dans l'agent réfrigérant est transférée à un dispositif (42) destiné à récupérer ladite chaleur et réalisé notamment sous la forme d'un chauffage à vapeur, d'une installation de dessalement d'eau ou d'une installation de dégivrage d'un avion.

**13.** Procédé selon l'une des revendications 7 à 12,
**caractérisé en ce que** l'agent réfrigérant est évacué dans l'environnement.

**14.** Aéronef comprenant un système de pile à combustible (10) selon l'une des revendications 1 à 6.

**15.** Aéronef selon la revendication 14,
**caractérisé en ce que** le système de pile à combustible (10) est agencé dans une zone non pressurisée de l'aéronef.

Fig. 1

EP 2 225 789 B1

Fig.2

Fig. 3

**EP 2 225 789 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19935719 A1